# EUROPÄISCHE PATENTSCHRIFT

(11) **EP 4 040 130 B1**
(45) Veröffentlichungstag und Bekanntmachung des Hinweises auf die Patenterteilung: **04.12.2024**
(21) Anmeldenummer: 22153886.1
(22) Anmeldetag: 28.01.2022
(51) Int. Cl.: G01M 3/02, G01M 3/26

(54) **VERFAHREN ZUR DICHTHEITSPRÜFUNG EINER ABGASANLAGE EINES HEIZGERÄTES**
METHOD OF LEAK TESTING AN EXHAUST SYSTEM OF A HEATING APPLIANCE
PROCÉDURE DE CONTRÔLE D'ÉTANCHÉITÉ D'UN SYSTÈME D'ÉCHAPPEMENT D'UN APPAREIL DE CHAUFFAGE

(30) Priorität: 05.02.2021 DE 102021102731
(43) Veröffentlichungstag der Anmeldung: 10.08.2022
(73) Patentinhaber: Vaillant GmbH, 42859 Remscheid (DE)
(72) Erfinder: Richter, Klaus, 42855 Remscheid (DE); Beitzer, Arnd, 42855 Remscheid (DE); Thum, Lars, 40724 Hilden (DE)

(56) Entgegenhaltungen:
- EP-A1- 3 712 502
- CN-U- 208 060 103

## Beschreibung

Die Erfindung betrifft ein Verfahren zur Dichtheitsprüfung einer Abgasanlage eines Heizgerätes, ein Computerprogramm, ein maschinenlesbares Speichermedium, ein Heizgerät und eine Verwendung einer Fördereinrichtung.

Vor der Inbetriebnahme von Heizungsanlagen wird die zugehörige Abgasanlage einer Dichtheitsprüfung unterzogen. Eventuelle Leckagen könnten zu einem Austreten von Verbrennungsgasen, beispielsweise in geschlossene Räume, und damit zur Gefährdung von Menschen führen. Der Einsatz von Niedertemperatur- oder Brennwerttechnik hat die Notwendigkeit einer Dichtheitsprüfung noch erhöht. Da bei derartigen Anlagen die Abgase eine niedrige Temperatur und damit nur noch geringe Energie aufweisen, um über einen Schornstein oder eine Abgasleitung ins Freie zu entweichen, kommen hier Gebläse zum Einsatz, die zu einem Überdruck innerhalb der Abgasanlage führen. Dieser Überdruck würde zu einem vermehrten Gasaustritt an einem Leck der Abgasanlage führen.

Üblicherweise erfolgt eine Dichtheitsprüfung, indem die Abgasanlage im Bereich ihrer Austrittsöffnung gasdicht verschlossen und anschließend mit Druck beaufschlagt wird. Der Druck in der unter Druck gesetzten Abgasanlage wird mittels eines Druckmessgerätes erfasst, wobei der festgestellte Druckabfall innerhalb eines definierten Prüfzeitraumes ein Maß für die Dichtheit der Abgasanlage darstellt.

Für die Druckerzeugung und -messung kommen zumeist spezielle Prüfeinrichtungen zum Einsatz, wobei zudem häufig Adapter für die Anpassung der Prüfeinrichtungen an die zu prüfende Heizungsanlage bzw. Abgasanlage notwendig sind. Somit ergibt sich, dass für eine Dichtheitsprüfung einer Abgasanlage eines Heizgerätes mehrere Einrichtungen vorzuhalten sind und ein erheblicher mit Kosten verbundener Arbeitsaufwand für deren Anschluss und Durchführung der Prüfung entsteht. Dies kann besonders nachteilig sein bei Abgasanlagen mit häufigem Bedarf einer Dichtheitsprüfung.

In der CN 208 060 103 U wird eine Vorrichtung zur Prüfung einer Abgasanlage eines Kraftfahrzeuges vorgeschlagen, wobei die Vorrichtung einen Anschluss für einen Druckluftquelle und einen Anschluss für die Abgasanlage vorgesehen ist und nach Aufbringen eines Prüfdruckes auf die zu prüfende Abgasanlage ein Luftstrom erfasst wird, der maßgeblich für die Leckage ist. Diese Lösung ist nachteilig aufwendig, da die Vorrichtung mitsamt einer Druckluftquelle an den Installationsort der Heizungsanlage verbracht werden muss.

Hiervon ausgehend ist es Aufgabe der Erfindung, ein Verfahren zur Dichtheitsprüfung einer Abgasanlage eines Heizgerätes bereitzustellen, das die geschilderten Probleme des Standes der Technik zumindest teilweise überwindet und insbesondere die Anzahl der für die Dichtheitsprüfung notwendigen Einrichtungen reduziert. Des Weiteren sollen zur Lösung der Aufgaben ein Computerprogramm, ein Regel- und Steuergerät und ein Heizgerät, sowie eine Verwendung des Heizgerätes angegeben werden.

Zudem soll der Arbeitsaufwand für die Dichtheitsprüfung einer Abgasanlage eines Heizgerätes und damit verbundene Kosten gemindert werden.

Diese Aufgaben werden gelöst durch die Merkmale der unabhängigen Patentansprüche. Weitere vorteilhafte Ausgestaltungen der hier vorgeschlagenen Lösung sind in den unabhängigen Patentansprüchen angegeben. Es wird darauf hingewiesen, dass die in den abhängigen Patentansprüchen aufgeführten Merkmale in beliebiger, technologisch sinnvoller, Weise miteinander kombiniert werden können und weitere Ausgestaltungen der Erfindung definieren. Darüber hinaus werden die in den Patentansprüchen angegebenen Merkmale in der Beschreibung näher präzisiert und erläutert, wobei weitere bevorzugte Ausgestaltungen der Erfindung dargestellt werden.

Hierzu trägt ein Verfahren zur Dichtheitsprüfung einer Abgasanlage eines Heizgerätes bei, das zumindest die folgenden Verfahrensschritte umfasst:
a) gasdichtes Verschließen der Abgasanlage im Bereich der Austrittsöffnung,
b) Inbetriebnehmen einer Fördereinrichtung zur Förderung eines brennfähigen Gemisches innerhalb des Heizgerätes, welche in Strömungsrichtung vor der Abgasanlage angeordnet ist, in einen definierten Betriebszustand,
c) Erfassen des durch die Fördereinrichtung geförderten Gasstromes,
d) Vergleich des in Schritt c) erfassten Gasstromes mit einem Referenzwert und Feststellen der Dichtheit der Abgasanlage.

Die Schritte a) - d) werden dabei zumindest einmal in der angegeben Reihenfolge durchgeführt. Insbesondere ist denkbar, dass die Schritte b), c) und d) zumindest teilweise parallel durchgeführt werden. Die weiteren (optionalen) Schritte des Verfahrens können ebenfalls gemäß ihrer Bezeichnung nacheinander oder zumindest teilweise einander überlagern (auch mit den Schritten b) - d)) ausgeführt werden. Das Verfahren kann zudem mit einem hier gleichfalls beschriebenen Heizgerät ausgeführt werden. Bevorzugt ist ein Regel- und Steuergerät eines Heizgerätes zur Durchführung des erfindungsgemäßen Verfahrens eingerichtet.

Die Bezeichnungen Strömungsrichtung und stromabwärts werden hier, bezogen auf die Strömungsrichtung des Gasstromes in der Abgasanlage bzw. im Heizgerät bei im Betrieb befindlichem Heizgerät, verwendet.

Das hier vorgeschlagene Verfahren beschreibt insbesondere eine Möglichkeit für eine automatisierte oder teilweise automatisierte Dichtheitsprüfung einer Abgasanlage eines Heizgerätes, wodurch insbesondere die Möglichkeiten einer fehlerhaften Dichtheitsprüfung durch menschliches Versagen weitestgehend ausgeschlossen wird. Als Vorteil des Verfahrens wird insbesondere angesehen, dass das Verfahren mit geringem Arbeitsaufwand durchführbar ist und somit nach Installation eines neuen Heizgerätes oder Wartungsarbeiten an demselben oder der Abgasanlage mit geringem Aufwand wiederholbar ist. Da für jede Dichtheitsprüfung die gleichen, im Heizgerät angeordneten Einrichtungen Einsatz finden, ist zudem eine hervorragende Vergleichbarkeit der Ergebnisse mehrerer, zeitlich beabstandeter, Dichtheitsprüfungen gegeben.

In Schritt a) erfolgt ein gasdichtes Verschließen, so dass kein Abgas üblicherweise ein offenes Ende der Abgasanlage des Heizgerätes an- bzw. durchströmen kann. Das offene Ende bezeichnet hier das dem Brenner bzw. dem Heizgerät abgewandte Ende der Abgasanlage. In einer sehr einfachen Ausführung erfolgt dies durch Einbringen eines expandierbaren Elementes, beispielsweise eines aufblasbaren Dichtballons, der nach Expansion die Abgasanlage gasdicht verschließt. Das offene Ende der Abgasanlage kann, muss aber nicht, mit dem Bereich der Austrittsöffnung übereinstimmen. Der Bereich der Austrittsöffnung kann eine beliebige Stelle innerhalb der Abgasanlage bzw. im Strömungsweg des Abgases sein. Dabei versteht sich, dass nur der Bereich der Abgasanlage bis zu dem Punkt, an dem diese verschlossen ist, in die Dichtheitsprüfung einbezogen wird. Denkbar wären auch andere Möglichkeiten des Verschließens wie beispielsweise das Aufbringen eines Blindstopfens.

In einer Ausgestaltung könnte ein automatisiertes Verschlusselement vorgesehen sein, beispielsweise eine ansteuerbare Verschlussklappe oder auch ein (hitzebeständiges) expandierbares Element, das in der Abgasanlage verbleibt und durch ein Steuersignal in Betrieb genommen wird und dann die Abgasanlage verschließt. Ein automatisiertes Verschlusselement würde die Möglichkeit einer vollständig automatisierten Dichtheitsprüfung eröffnen.

In einem Schritt b) erfolgt das Anfahren einer Fördereinrichtung zur Förderung eines brennfähigen Gemisches innerhalb des Heizgerätes, welche in Strömungsrichtung gesehen vor der Abgasanlage angeordnet ist, in einen definierten Betriebszustand. Der definierte Betriebszustand ermöglicht später den Vergleich mit einem auf den definierten Betriebszustand abgestimmten Referenzwert. Die Fördereinrichtung bringt durch den Betrieb in definiertem Betriebszustand einen definierten Prüfdruck auf die Abgasanlage. In einer bevorzugten Ausgestaltung ist die Fördereinrichtung ein Gebläse oder Ventilator. Die Fördereinrichtung ist bevorzugt, in Strömungsrichtung gesehen, vor dem Brenner des Heizgerätes angeordnet, wodurch die Dichtheit des Brenners bzw. der Brennkammer mit in die Dichtheitsprüfung einbezogen wird. Gleichfalls möglich ist die Integration einer Fördereinrichtung zwischen Brenner und Abgasanlage, wobei die Fördereinrichtung den thermischen Belastungen entsprechend ausgelegt ist.

In einer bevorzugten Ausgestaltung ist die Fördereinrichtung ein Gebläse und der definierte Betriebszustand eine definierte Drehzahl desselben. Als Vorteil dieser Ausgestaltung wird insbesondere die einfache und kostengünstige Umsetzung angesehen.

Die Fördereinrichtung ist eine Fördereinrichtung zur Förderung eines brennfähigen Gemisches innerhalb des Heizgerätes. Dies kann vorteilhaft insbesondere bei Heizgeräten mit Brennwerttechnik verwirklicht werden und bietet den Vorteil, dass keine gesonderte Fördereinrichtung für die Dichtheitsprüfung vorzuhalten ist, sondern eine ohnehin im Heizgerät vorhandene Fördereinrichtung für das vorgeschlagene Verfahren nutzbar ist. Insbesondere ist die Fördereinrichtung zur Förderung eines brennfähigen Gemisches innerhalb des Heizgerätes ein Gebläse, das bevorzugt auf eine definierte Drehzahl als definierten Betriebszustand gefahren wird.

In einem Schritt c) erfolgt eine Erfassung des durch die Fördereinrichtung geförderten Gasstromes. Die Erfassung kann bereits während des Anfahrens der Fördereinrichtung (Schritt b)) beginnen, jedoch sollte das Verfahren erst nach Erreichen eines stationären Zustandes fortgeführt werden. Der geförderte Gasstrom entspricht dem stromabwärts der Fördereinrichtung durch Undichtigkeiten entweichenden Gasstrom und stellt somit ein Maß für die Dichtheit der Prüfstrecke zwischen Fördereinrichtung und dem Punkt, an dem die Abgasanlage in Schritt a) verschlossen wurde, dar.

Gemäß einer bevorzugten Ausgestaltung erfolgt die Erfassung mittels eines Gasstromsensors. Mit einem solchen Gasstromsensor kann der Massenstrom und/oder Volumenstrom des Gasstroms zu vorgegebenen Zeitpunkten oder (kumuliert) über einen Zeitraum (direkt oder mittelbar) ermittelt werden. Dieser ist bevorzugt in der Luftzuführung zum Brenner des Heizgerätes, insbesondere dem Luftansaugrohr, angeordnet. Auf der Seite der Luftzuführung zum Brenner wird dabei, insbesondere nach Ausführung des Schrittes b), nur ein Gasstrom entsprechend dem in der Prüfstrecke entweichenden Gasstrom gefördert.

In einem Schritt d) wird nunmehr der in Schritt c) erfasste Gasstrom mit einem Referenzwert verglichen. Der Referenzwert wurde bevorzugt im Vorfeld für die Abgasanlage mit dem definierten Betriebszustand der Fördereinrichtung ermittelt. Liegt der erfasste Gasstrom über dem Referenzwert ist die Abgasanlage undicht, bei einem erfassten Gasstrom unter oder gleich dem Referenzwert gilt die Dichtheitsprüfung als bestanden.

In einem optionalen Verfahrensschritt e) kann nun das Ergebnis des Vergleiches aus Schritt d) auf einer geeigneten Anzeigeeinrichtung ausgegeben werden. Beispiele für geeignete Anzeigeeinrichtungen sind farbige Signalleuchten, ein Lautsprecher und/oder eine digitale Anzeigeeinrichtung, die vorteilhaft zusätzlich eine Angabe der Zahlenwerte von erfasstem Gasstrom und/ oder Referenzwert ermöglicht. Alternativ könnte das Prüfergebnis auch drahtlos an eine Datenverarbeitungsanlage übermittelt oder über eine Anzeigeeinrichtung des Heizgerätes sichtbar gemacht werden.

In einem weiteren optionalen Verfahrensschritt f) könnte bei Feststellung einer undichten Abgasanlage in Schritt d) eine Inbetriebnahme des Heizgerätes verhindert werden. Durch diesen zusätzlichen Verfahrensschritt können der Betrieb eines Heizgerätes mit undichter Abgasanlage und Schäden durch eine Missachtung des Ergebnisses der Dichtheitsprüfung ausgeschlossen werden.

Nach einer bevorzugten Ausgestaltung erfolgt die Durchführung der Schritte e) und f) zumindest zeitweise parallel, besonders bevorzugt zeitgleich.

Nach einem weiteren Aspekt wird auch ein Computerprogramm vorgeschlagen, welches zur (zumindest teilweisen) Durchführung eines hier vorgestellten Verfahrens eingerichtet ist. Dies betrifft mit anderen Worten insbesondere ein Computerprogramm(-produkt), umfassend Befehle, die bei der Ausführung des Programms durch einen Computer diesen veranlassen, ein hier beschriebenes Verfahren auszuführen.

Nach einem weiteren Aspekt wird auch ein maschinenlesbares Speichermedium vorgeschlagen, auf dem das Computerprogramm gespeichert ist.

Regelmäßig handelt es sich bei dem maschinenlesbaren Speichermedium um einen computerlesbaren Datenträger.

Ein Regel- und Steuergerät des Heizgerätes ist eingerichtet zur Durchführung eines hier vorgestellten Verfahrens. Das Regel- und Steuergerät kann hierzu beispielsweise einen Prozessor aufweisen bzw. über diesen verfügen. In diesem Zusammenhang kann der Prozessor beispielsweise das auf einem Speicher (des Regel- und Steuergeräts) hinterlegte Verfahren ausführen. Bevorzugt ist der Referenzwert auf dem gleichen Speicher hinterlegt. Weiterhin vorteilhaft kann das Regel- und Steuergerät zur Anzeige der Prüfergebnisse nach Schritt e) auf eine bei den meisten Heizgeräten ohnehin vorhandene Anzeigeeinrichtung zugreifen. Nicht zuletzt ist auch der Schritt f), ein Verhindern der Inbetriebnahme des Heizgerätes durch das Regel- und Steuergerät des Heizgerätes, einfach zu verwirklichen.

Nach einem weiteren Aspekt wird auch ein Heizgerät mit einem hier vorgestellten Regel- und Steuergerät vorgeschlagen. Bei dem Heizgerät handelt es sich insbesondere um ein Gasheizgerät mit einem Gasbrenner und einer Fördereinrichtung, die ein Gemisch aus Gas und Verbrennungsluft (brennfähiges Gemisch) zu einem Gasbrenner fördern kann.

Nach einem weiteren Aspekt wird auch eine Verwendung eines Heizgerätes für die Dichtheitsprüfung einer Abgasanlage des Heizgerätes vorgeschlagen. Insbesondere wird die Verwendung einer Fördereinrichtung zur Förderung eines brennfähigen Gemisches in einen Brenner des Heizgerätes zum Druckaufbau für die Dichtheitsprüfung einer Abgasanlage des Heizgerätes vorgeschlagen.

Hier werden somit ein Verfahren zur Dichtheitsprüfung einer Abgasanlage eines Heizgerätes, ein Computerprogramm und ein Heizgerät zur Durchführung des Verfahrens sowie eine Verwendung einer Fördereinrichtung angegeben, welche die mit Bezug auf den Stand der Technik geschilderten Probleme zumindest teilweise lösen. Insbesondere tragen das Verfahren, das Computerprogramm und das Heizgerät sowie die Verwendungen jeweils zumindest dazu bei, die Dichtheitsprüfung zu vereinfachen und Kosten zu reduzieren. Zudem können durch einen hohen Automatisierungsgrad des vorgeschlagenen Verfahrens fehlerhafte Prüfungen weitestgehend ausgeschlossen und somit die Betriebssicherheit erhöht werden.

Die Erfindung wird nun anhand der Figuren detailliert erläutert. Es stellen dar:
- Fig. 1:: einen Ablauf eines hier vorgeschlagenen Verfahrens, und
- Fig. 2:: ein hier vorgeschlagenes Heizgerät.

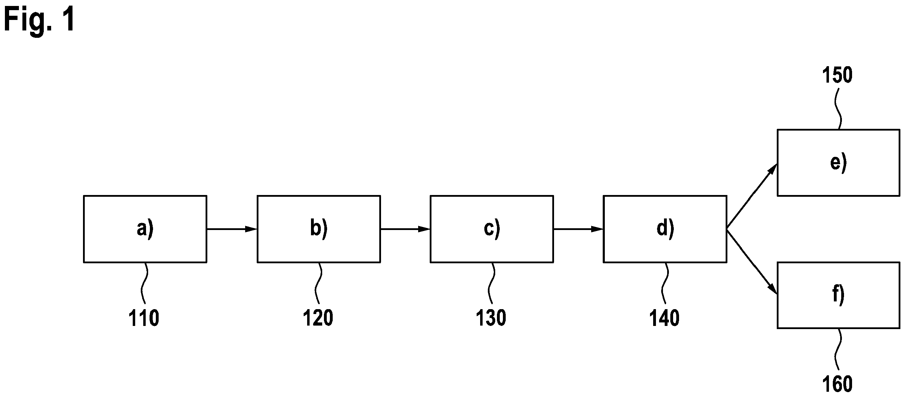

Fig. 1 zeigt beispielhaft und schematisch einen Ablauf eines hier vorgeschlagenen Verfahrens. Das Verfahren erlaubt die Dichtheitsprüfung einer Abgasanlage eines Heizgerätes. Die Verfahrensschritte a) bis f) sind mittels Blöcken 110, 120, 130, 140, 150 und 160 dargestellt.

In Block 110 erfolgt gemäß Schritt a) ein gasdichtes Verschließen des offenen Endes der Abgasanlage. In Block 120 nach Schritt b) wird eine Fördereinrichtung in Betrieb genommen und bis zu einem definierten Betriebszustand angefahren. In Block 130 wird entsprechend Schritt c) der durch die Fördereinrichtung geförderte Gasstrom erfasst und im Folgenden in Block 140 gemäß Schritt d) mit einem Referenzwert verglichen. Das Ergebnis des Vergleiches stellt das Ergebnis der Dichtheitsprüfung dar und wird zeitgleich in Block 150 über eine Anzeigeeinrichtung ausgegeben (Schritt e)) und, bei negativem Ergebnis der Dichtheitsprüfung, in Block 160 gemäß Schritt f) eine Inbetriebnahme des Heizgerätes blockiert.

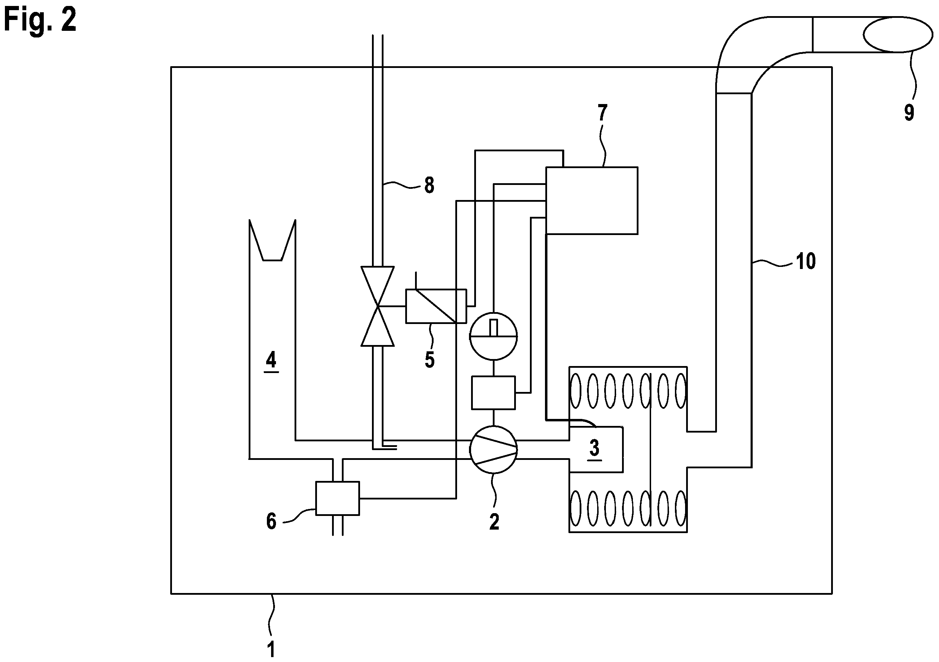

Fig. 2 zeigt ein Beispiel eines erfindungsgemäßen Heizgerätes 1. Dieses weist einen Brenner 3 auf, dem über ein Luftansaugrohr 4 und über ein Gaszuführungsrohr 8 ein brennfähiges Gasgemisch zur Verfügung gestellt wird, das über eine Fördereinrichtung 2, die hier als Gebläse ausgeführt ist, zugeführt wird. Der durch die Fördereinrichtung 2 geförderte Gasstrom kann über einen Gasstromsensor 6 erfasst werden. Im Gaszuführungsrohr 8 ist ein Gasventil 5 angeordnet, welches die Gaszufuhr unterbrechen kann. Das Heizgerät 1 weist zudem ein Regel- und Steuergerät 7 auf, das mit dem Gasventil 5, dem Gasstromsensor 6, der Fördereinrichtung 2 und dem Brenner 3 elektrisch verbunden ist. Dem Brenner 3 ist eine Abgasanlage 10 nachgeordnet, die die Verbrennungsgase des Brenners 3 ins Freie abführt.

Das in Figur 1 dargestellte Verfahren ist als Computerprogramm auf einem Speicher im Regel- und Steuergerät 7 hinterlegt, gleichfalls der in Block 140 (Schritt d)) herangezogene Referenzwert.

Gemäß Block 110 (Schritt a)) ist die Abgasanlage 10 an ihrem offenen Ende mittels eines Dichtballons 9 gasdicht verschlossen. Nach dem in Block 120 dargestellten Schritt b) wird nun mittels einer Ansteuerung durch das Regel- und Steuergerät 7 die hier als Gebläse ausgebildete Fördereinrichtung 2 bis zu einer definierten Drehzahl hochgefahren und damit ein Prüfdruck auf die Abgasanlage 10 und den Brenner 3 aufgebracht.

Nachdem der vom Gasstromsensor 6 zurückgegebene Wert einen stationären Zustand erreicht hat, wird dieser Wert durch das Regel- und Steuergerät 7 gemäß dem in Block 130 dargestellten Schritt c) erfasst. Anschließend wird durch das Regel- und Steuergerät 7 gemäß Block 140 (Schritt d)) der erfasste Gasstrom mit dem im Speicher hinterlegten Referenzwert verglichen.

Sollte der erfasste Gasstrom höher als der Referenzwert sein, liegt in Abgasanlage 10 oder Brenner 3 eine Undichtigkeit vor. Ist der erfasste Gasstrom kleiner oder gleich dem Referenzwert wird die Dichtheitsprüfung als bestanden definiert.

Das Ergebnis wird nun in Block 150 gemäß Schritt e) durch das Regel- und Steuergerät 7 über eine hier nicht näher gezeigte Anzeigeeinrichtung des Heizgerätes 1 angezeigt. Für den Fall, dass der erfasste Gasstrom höher als der Referenzwert ist und somit eine Undichtigkeit erkannt wurde, blockiert das Regel- und Steuergerät 7 zudem eine Inbetriebnahme des Heizgerätes 1.

### Bezugszeichenliste

- 1: Heizgerät
- 2: Fördereinrichtung
- 3: Brenner
- 4: Luftansaugrohr
- 5: Gasventil
- 6: Gasstromsensor
- 7: Regel- und Steuergerät
- 8: Gaszuführungsrohr
- 9: Dichtballon
- 10: Abgasanlage

## Patentansprüche

1. Verfahren zur Dichtheitsprüfung einer Abgasanlage (10) eines Heizgerätes (1), umfassend zumindest die folgenden Schritte:
a) Gasdichtes Verschließen der Abgasanlage (10) im Bereich einer Austrittsöffnung,
b) Inbetriebnehmen einer Fördereinrichtung (2) zur Förderung eines brennfähigen Gemisches innerhalb des Heizgerätes (1), welche in Strömungsrichtung vor der Abgasanlage (10) angeordnet ist, in einen definierten Betriebszustand,
c) Erfassen des durch die Fördereinrichtung (2) geförderten Gasstromes,
d) Vergleichen des erfassten Gasstromes mit einem Referenzwert zur Feststellung der Dichtheit der Abgasanlage (10).

2. Verfahren nach Anspruch 1, wobei das Ergebnis des Schrittes d) auf einer optischen und/ oder akustischen Anzeigeeinrichtung ausgegeben wird.

3. Verfahren nach einem der vorangehenden Ansprüche, wobei in einem weiteren Verfahrensschritt f) bei Feststellung einer undichten Abgasanlage (10) in Schritt d) eine Inbetriebnahme des Heizgerätes (1) verhindert wird.

4. Verfahren nach einem der vorangehenden Ansprüche, wobei in Schritt c) die Erfassung mittels eines Gasstromsensors (6) erfolgt.

5. Verfahren nach einem der vorangehenden Ansprüche, wobei in Schritt b) die Fördereinrichtung (2) als Gebläse ausgebildet ist und der definierte Betriebszustand eine definierte Drehzahl des Gebläses ist.

6. Verfahren nach einem der vorangehenden Ansprüche, wobei in Schritt a) ein gasdichtes Verschließen der Abgasanlage (10) mittels eines automatisierten Verschlusselementes (9) erfolgt.

7. Heizgerät (1), aufweisend eine Fördereinrichtung (2) zur Förderung eines brennfähigen Gemisches in einen Brenner, wobei die Fördereinrichtung (2) als Gebläse ausgebildet ist, **gekennzeichnet durch** ein, optional automatisiertes, Verschlusselement (9) zum gasdichten Verschließen einer Abgasanlage (10) des Heizgeräts (1) im Bereich einer Austrittsöffnung sowie ein Regel- und Steuergerät (7), eingerichtet zur Durchführung zumindest der Schritte b)-d) eines Verfahrens nach einem der Ansprüche 1 bis 6.

8. Computerprogramm, umfassend Befehle, die ein Heizgerät (1) nach Anspruch 7 dazu veranlassen, ein Verfahren nach einem der Ansprüche 1 bis 6 auszuführen.

9. Maschinenlesbares Speichermedium, auf dem das Computerprogramm nach Anspruch 8 gespeichert ist.

10. Verwendung einer Fördereinrichtung (2) zur Förderung eines brennfähigen Gemisches in einen Brenner (3) eines Heizgerätes (1) nach Anspruch 7 zum Druckaufbau für die Dichtheitsprüfung einer Abgasanlage (10) des Heizgerätes (1).

## Claims

1. Method for testing the tightness of an exhaust system (10) of a heating appliance (1), comprising at least the following steps:
a) gas-tight sealing of the exhaust system (10) in the region of an outlet opening,
b) bringing into operation a conveyor apparatus (2) for conveying a combustible mixture within the heating appliance (1), which conveyor apparatus is arranged upstream of the exhaust system (10) in the flow direction, into a defined operating state,
c) detecting the gas stream conveyed by the conveyor apparatus (2),
d) comparing the detected gas stream with a reference value to ascertain the tightness of the exhaust system (10).

2. Method according to claim 1, wherein the result of step d) is output on an optical and/or acoustic display apparatus.

3. Method according to any of the preceding claims, wherein in a further method step f) the bringing into operation of the heating appliance (1) is prevented when it is ascertained in step d) that the exhaust system (10) is untight.

4. Method according to any of the preceding claims, wherein in step c) the detection is carried out by means of a gas stream sensor (6).

5. Method according to any of the preceding claims, wherein in step b) the conveyor apparatus (2) is in the form of a blower and the defined operating condition is a defined speed of the blower.

6. Method according to any of the preceding claims, wherein in step a) the exhaust system (10) is sealed in a gas-tight manner by means of an automated sealing element (9).

7. Heating appliance (1) having a conveyor apparatus (2) for conveying a combustible mixture into a burner, wherein the conveyor apparatus (2) is in the form of a blower, **characterized by** an optionally automated sealing element (9) for gas-tight sealing of an exhaust system (10) of the heating appliance (1) in the region of an outlet opening, and a closed-loop and open-loop control appliance (7) designed to perform at least steps b) - d) of a method according to any one of claims 1 to 6.

8. Computer program comprising commands that cause a heating appliance (1) according to claim 7 to carry out a method according to any one of claims 1 to 6.

9. Machine-readable storage medium on which the computer program according to claim 8 is stored.

10. Use of a conveyor apparatus (2) for conveying a combustible mixture into a burner (3) of a heating appliance (1) according to claim 7 in order to build up pressure for the tightness testing of an exhaust system (10) of the heating appliance (1).

## Revendications

1. Procédé de contrôle d'étanchéité d'un système d'échappement (10) d'un appareil de chauffage (1), comprenant au moins les étapes suivantes :
a) fermeture étanche aux gaz du système d'échappement (10) au niveau d'une ouverture de sortie,
b) mise en service d'un appareil de transport (2) pour le transport d'un mélange combustible à l'intérieur de l'appareil de chauffage (1) qui est disposé en amont du système d'échappement (10) dans le sens d'écoulement, dans un état de fonctionnement défini,
c) détection du flux de gaz transporté par l'appareil de transport (2),
d) comparaison du flux de gaz détecté avec une valeur de référence pour déterminer l'étanchéité du système d'échappement (10).

2. Procédé selon la revendication 1, dans lequel le résultat de l'étape d) est émis sur un appareil d'affichage optique et/ou acoustique.

3. Procédé selon l'une quelconque des revendications précédentes, dans lequel, dans une étape de procédé supplémentaire f), lors de la détermination d'un système d'échappement (10) non étanche à l'étape d), une mise en service de l'appareil de chauffage (1) est empêchée.

4. Procédé selon l'une quelconque des revendications précédentes, dans lequel, à l'étape c), la détection est effectuée au moyen d'un capteur de flux de gaz (6).

5. Procédé selon l'une quelconque des revendications précédentes, dans lequel, à l'étape b), l'appareil de transport (2) est conçu en tant que ventilateur et l'état de fonctionnement défini est une vitesse de rotation définie du ventilateur.

6. Procédé selon l'une quelconque des revendications précédentes, dans lequel, à l'étape a), une fermeture étanche aux gaz du système d'échappement (10) est effectuée au moyen d'un élément de fermeture automatisé (9).

7. Appareil de chauffage (1) présentant un appareil de transport (2) pour le transport d'un mélange combustible dans un brûleur, dans lequel l'appareil de transport (2) est conçu en tant que ventilateur, **caractérisé par** un élément de fermeture (9), facultativement automatisé, pour la fermeture étanche aux gaz d'un système d'échappement (10) de l'appareil de chauffage (1) au niveau d'une ouverture de sortie, ainsi que par un appareil de régulation et de commande (7) configuré pour l'exécution d'au moins les étapes b)-d) d'un procédé selon l'une quelconque des revendications 1 à 6.

8. Programme informatique comprenant des instructions qui amènent un appareil de chauffage (1) selon la revendication 7 à mettre en oeuvre un procédé selon l'une quelconque des revendications 1 à 6.

9. Support de stockage lisible par machine sur lequel le programme informatique selon la revendication 8 est stocké.

10. Utilisation d'un appareil de transport (2) pour le transport d'un mélange combustible dans un brûleur (3) d'un appareil de chauffage (1) selon la revendication 7 en vue de la montée en pression pour le contrôle d'étanchéité d'un système d'échappement (10) de l'appareil de chauffage (1).
